# EUROPEAN PATENT APPLICATION

(11) **EP 2 584 746 A1**
(43) Date of publication of application: **24.04.2013**
(21) Application number: 12168414.6
(22) Date of filing: 17.05.2012
(51) Int. Cl.: H04L 12/58

(54) **Methods and devices for creating a communications log and visualisations of communications across multiple services**

(30) Priority: 17.10.2011 US 201161548066 P
(71) Applicant: Research In Motion Limited, Waterloo, ON N2L 3W8 (CA)
(72) Inventor: Gärdenfors, Dan Zacharias, 211 40 Malmö (SE); Johansson, Karl-Anders Reinhold, 211 40 Malmö (SE); Tellhed, Göran Mikael, 211 40 Malmö (SE)
(74) Representative: Finnie, Peter John

(57) **Abstract**

There is described a computer-implemented method comprising creating, in a communications log having a plurality of communication sources associated with the communications log, a database entry for each communication originating from any of the associated communication sources, each database entry comprising data representative of the respective communication. There is also described a computer-implemented method comprising displaying, in an interactive user interface on a display of an end-user electronic device, a visual representation of database entries contained in a communications log having a plurality of communication sources associated with the communications log, each database entry comprising data representative of a communication originating from any of the said associated communications source. Devices and computer-readable media comprising instructions implementing these methods are also described.

## Description

### TECHNICAL FIELD

The disclosed embodiments relate to devices and methods for creating a communications log of communications across multiple communications sources, and for presenting visualizations of the data contained therein on the display of an end-user electronic device.

### BACKGROUND

Electronic devices are increasingly used to send and receive electronic communications, for example, by an individual to communicate with friends and colleagues, and the number of individual electronic communications sent and received using those electronic devices has increased significantly as a result.

In addition, a typical user of an electronic device will now tend to send and receive electronic communications using more than one communication service. Over time, a history of those communications accumulates in storage and can be accessed to find sent and received items. Often, a conversation can range across communications over a number of communications services, between different sending and receiving parties and can reoccur at different points in the communication history.

Efforts are ongoing to increase the efficiency and usability of electronic devices for electronic communications.

### BRIEF DESCRIPTION OF THE DRAWINGS

The present disclosure and the embodiments set out herein can be better understood by reference to the description of the embodiments set out below, in conjunction with the appended drawings which can be described as follows.
Figure 1 is a block diagram illustrating an example electronic device usable by an end-user in some embodiments.
Figure 2 shows an example smart phone device usable by an end-user in some embodiments.
Figure 3 shows an example tablet computer device usable by an end-user in some embodiments.
Figure 4 shows an example system of networked apparatus usable in some example embodiments.
Figures 5A-5C show example embodiments of visual representations of data contained in an example communications log.
Figure 6 is a flow chart showing example processing for creating, populating and maintaining a communications log.

### DESCRIPTION OF EMBODIMENTS

In one aspect, the present disclosure describes a computer-implemented method comprising creating, in a communications log having a plurality of communication sources associated with the communications log, a database entry for each communication originating from any of the associated communication sources, each database entry comprising data representative of the respective communication.

In another aspect, the present disclosure describes a device comprising: one or more data processing units; and memory containing instructions which when carried out by one or more of the data processing units cause the device to create, in a communications log having a plurality of communication sources associated with the communications log, a database entry for each communication originating from any of the associated communication sources, each database entry comprising data representative of the respective communication.

In another aspect, the present disclosure describes a computer program product comprising: memory comprising instructions which when executed by one or more data processing units of an electronic device cause the device to: create, in a communications log having a plurality of communication sources associated with the communications log, a database entry for each communication originating from any of the associated communication sources, each database entry comprising data representative of the respective communication.

In another aspect, the present disclosure describes a computer-implemented method comprising: displaying, in an interactive user interface on a display of an end-user electronic device, a visual representation of database entries contained in a communications log having a plurality of communication sources associated with the communications log, each database entry comprising data representative of a communication originating from any of the said associated communications source.

In another aspect, the present disclosure describes a device comprising: a display; one or more data processing units; and memory containing instructions which when carried out by the one or more of the data processing units cause the device to: display, in an interactive user interface on a display of an end-user electronic device, a visual representation of database entries contained in a communications log having a plurality of communication sources associated with the communications log, each database entry comprising data representative of a communication originating from any of the said associated communication sources.

In another aspect, the present disclosure describes a computer program product comprising: memory comprising instructions which when executed by one or more data processing units of an electronic device cause the device to: display, in an interactive user interface on a display of an end-user electronic device, a visual representation of database entries contained in a communications log having a plurality of communication sources associated with the communications log, each database entry comprising data representative of a communication originating from any of the said associated communication sources.

As will be described in greater detail below, at least some example embodiments of the present disclosure describe electronic devices, methods and computer-readable media comprising instructions which allow such electronic devices to create a communication log of communications from across multiple communications sources.

The communications log may be a log of communications for one or more given end-users of one or more electronic devices. An end-user may be an individual person who sends and receives electronic communications, for example, by a number of communication sources. For example, that individual may have user accounts with an email service, a social media network service and a microblog service through which that user sends and receives electronic communications.

On the other hand, the communications log may be a log of communications sent and received by or on behalf of a non-personal entity. For example, the communications log may log electronic communications sent and received by or on behalf of a given business or organisation or department thereof. For example, a helpdesk may have one or more central email accounts and phone numbers to which electronic communications are sent and logged in a communications log.

Broadly, the communications log of the present disclosure can be used to log any communications sent and received by a communications source that is associated with the communications log. A communications source may be the origination of messages sent and received by a given electronic communications service by one or more given users or user accounts. For example, a communications source may be the emails sent and received by an end-user's email account provided by an email service provider. Another example of a communications source may be the telephone calls or text messages sent and received by an individual cell phone number serviced by a cell phone service provider. Another example of a communications source may be instant messages sent and received by an end-user's account provided by an instant message service provider. Another example of a communications source may be blog posts or microblog posts sent to or received by a user account of a given blog or microblog service provider. Another example of a communications source may be messages sent and received by a user account of a given social media network provider. Another example of a communications source may be messages sent and received by a given RSS feed supported by a given service provider. The above examples are intended to be non-limiting, and the communication sources in the present disclosure are intended to encompass any means by which electronic messages can be posted, or sent or received by electronic devices from a given sending user and/or to one or more given recipient users.

The communication log in the present disclosure is usable to log communications originating from more than one of these communication sources. The communications log logs communications originating from communication sources that are associated with the communications log. For example, an end-user may associate with a communications log two email accounts, his cell phone number for logging phone calls, video calls and text and multimedia messages sent thereby over the telephony and data network, a social media network account to log all messages sent from and received by that account, and an account with a microblog service to log all of the microblog posts posted thereto and received thereby.

The communications log may comprise database entries, for example, one for each communication. In embodiments, a communication history of a user on an associated source may be merged into the communications log, for example by crawling through the communications history and generating database entries for communications found in the history, for example, when that source is first associated with the communications log. For example, when a user first associates an email account to the communications log, which may be achieved by authentication of that email account by the user, the sent and received email history on that email account may be crawled and database entries for each email sent and/or received may be created.

In embodiments, the communications log is stored locally at an end-user's electronic device. In embodiments, database entries in the communications log may be created by the end-user's electronic device. In embodiments, the communications log may be stored remotely from an end-user's electronic device, at one or more servers. At least portions of the communications log data can be transferred from the one or more servers to the end-user's electronic device, as required (for example, to enable portions of the communications log to be accessed by the end-user). In embodiments, a cloud architecture may be used to create and/or maintain the communications log. In embodiments, one or more server devices or peer devices may create database entries in the user's communications log. In embodiments, one or more of the foregoing configurations may be used together to implement the communications log.

In embodiments, the database entries representing electronic communications may include data indicating the communication source from which their respective communications originate. The database entries may also include a date and time stamp of when their respective communications were sent or received. In embodiments, the database entries may also include an indication of the sending and receiving parties of the respective communications. The database entries may also include a link to the respective communications.

In addition, in embodiments, further data representative of the content of the originating communications and/or the context in which they were sent may be stored in the database. Such content and context data can aid visualisation, searching and filtering of the communications history in the user interface, described below.

In this respect, in embodiments, the database entries may include one or more key words or phrases indicative of the content of the respective communications, or one or more metatags indicative of the content. These may be generated by natural language processing of the content of the communication. In embodiments, the database entries may include image data, video data and/or audio data of or relating to the electronic communication. For example, stills and/or video and audio snippets of a group video chat session may be stored in the database entry for that video chat session. Tags indicative of the content of instant messages sent by participants parallel to the group video chat may also be stored.

In addition, in embodiments, database entries may include location data of sending and receiving parties. In embodiments, database entries may include motion and/or orientation data of sending and receiving parties. In embodiments, database entries may include device identification data of sending and receiving parties or devices coupled thereto. In embodiments, database entries may include data representative of activity contemporaneous to sending or receiving the communication or related to the communication such as searches, other communications, image data, video data, and audio data.

In embodiments, a visual representation of database entries contained in the communications log can be displayed on a display of a user's electronic device. In embodiments, the display is interactive and may facilitate the recognition of patterns in the user's communications, and the filtering and searching of the user's communications. In embodiments, access to a visualisation of the user's communications log may be provided by an application stored on the user's electronic device. For example, a communications log application provided on the end-user electronic device may allow an end-user to view a visualisation of the communications log data. In embodiments, a visualisation of the user's communications log may be accessed from different applications that may, for example, provide the user access to the different communications services. For example, an end-user may view a visualisation of the communications log data in or from an email client, or a web browser, provided on the end-user device.

In embodiments, the visual representation includes a representation the communications log data is shown along an interactive timeline, displaying data based on a date and time stamp stored for each database entry. In embodiments, an area chart showing the frequency of communications across different logged communications sources, or with different sending and receiving parties, may be shown along the timeline. In embodiments, data representing the content of communications in the range of the timeline is reproduced. For example, as the timeline is panned through different days, keywords representing email content sent and received that day may be shown in a keyword cloud on the display, images sent and received or video data or stills from video calls may be shown on the display, for example in a frame or in the background, and audio snippets from phone calls or video can be played back through a speaker. The reproduced content may be obtained from the content data stored in the database entries for the communications, or it may be retrieved from the original communications themselves directly, for example, on an ad hoc basis as and when the communications are represented in the timeline.

In embodiments, user interface objects indicative of individual communications may be displayed in the user interface, for example to show the occurrence of a communication on the timeline. The user interface object for a communication may summarise attributes of the communication, for example, stored in the database. For example, an image of an envelope may be shown to indicate the occurrence of an email and the name of the sender or recipient may be shown. An RSS feed icon may be shown to indicate receipt of a communication on an RSS feed. In embodiments, selection of a user interface object representative of an individual communication activates a link to the original communication. In embodiments, activation of a link pulls into communications log user interface a reproduction of the original communication. For example, user-selection of a link to a microblog post in the communications log user interface causes the original microblog post or the content thereof to be reproduced in the communications log user interface. Alternatively, or in addition, activation of the link causes the electronic device to navigate away from the communications log user interface and to reproduce the original communication in another application. For example, user-selection of a link to a microblog post in the communications log user interface causes the device to navigate in a web browser or microblog viewer application to the original microblog post.

The sheer volume of electronic communications an end-user individual or entity typically sends and receives, their differing access means, locations and formats, and the size of the data the communications represent means that the user's entire communication history is typically spread out across the different electronic communication services, and therefore it is not possible to sort through and search directly. Normally, the communication history on each communication service only allows a list view of the communication history, which is difficult to search effectively. In addition, where a conversation has taken place at different times over multiple communications services, a user has to recall the communication services(s) used for each conversation and then search those communications sources individually. Even then, there would be no functional link between the communications on the different services that are part of the same conversation.

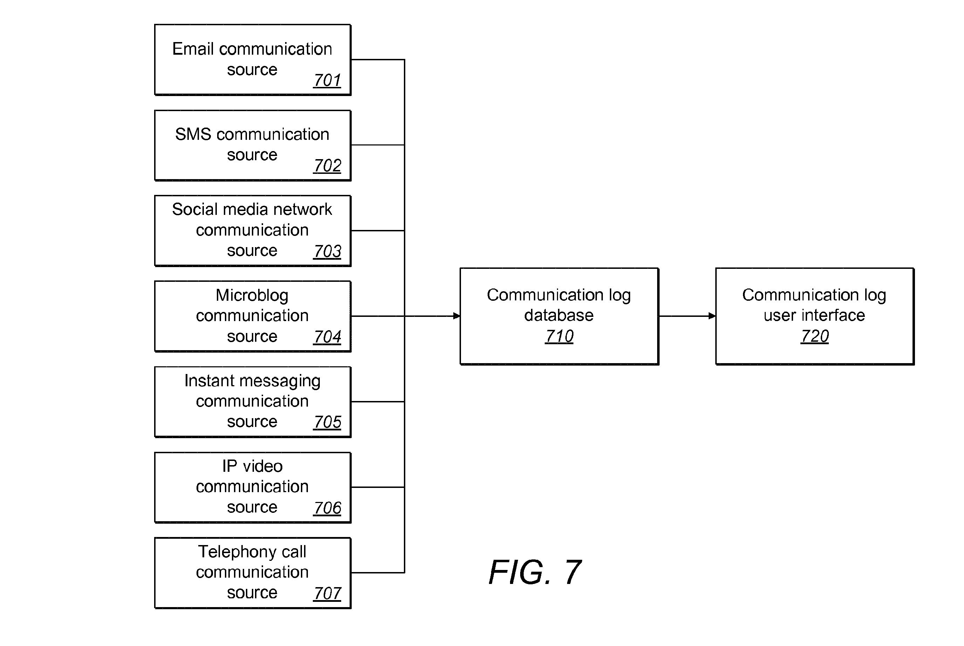

The provision of a communications log in accordance with the present disclosure enables communications originating from different communications sources, sent and received using different communications services, to be logged together in a single unified database. For example, referring to Figure 7, which shows a block diagram representing a data flow in accordance with an embodiment of the present disclosure, a single communication log database 710 receives data from communication sources 701-707. For example, the communication log database 710 unifies communications data originating from email communication source 701 (e.g. emails sent and received using a webmail account), SMS communication source 702 (e.g. sms messages sent and received from a cell phone number), social media network communication source 703 (e.g. messages sent and received using an account on a social media network service), microblog communication source 704 (e.g. microblog posts posted by and sent to an account on a microblog sevice), instant messaging communication source 705 (e.g. instant messages sent and received using an account on an instant messaging service), IP video chat communication source 706 (e.g. video chats participated in using an account on an IP video chat service) and telephony call communication source 707 (e.g. phone calls made and received from a cell phone number). Communications from the different communication sources lead to entries being created in the communication log database 710 with which the sources 701-707 are associated. The communications from sources 701-707 may each be in a represented in communication log database 710 in a single, unified format, and they may be represented in a single table of the communication log database 710.

The database entries for each communication may contain data representative of the original communication and may be much smaller in size and easier to handle and process than the original communication data itself. For example, the database entries may include data representative of an identification of the communications source from which the communication was originated, an identification of the senders and recipients party to the communication, a date and time stamp of when the communication was sent or received, and a link to the original communication.

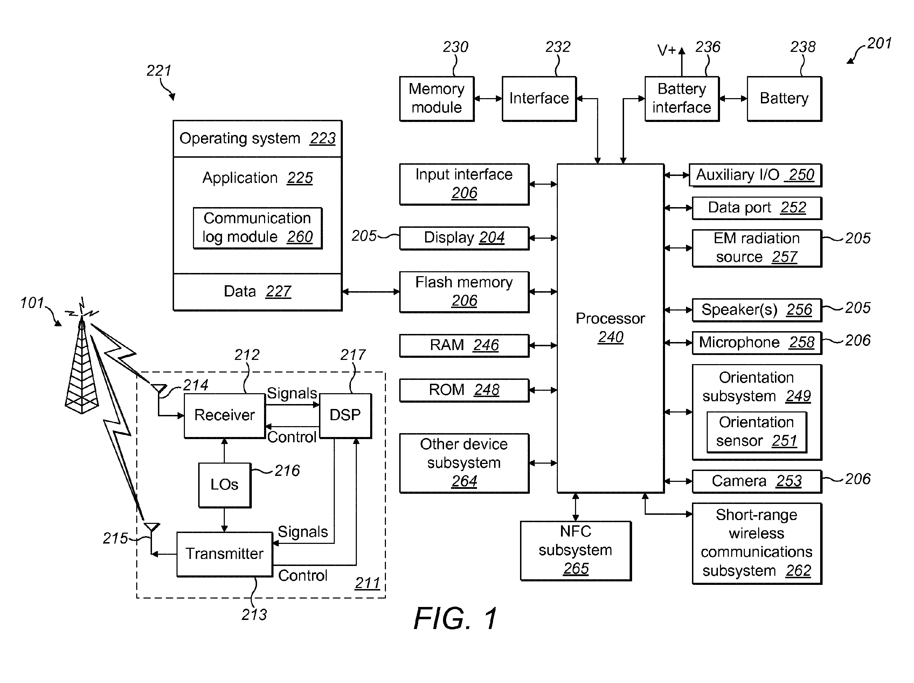

In accordance with the present disclosure, the data stored in the communications log is relatively easily processed and manipulateable as, unlike the raw communication data originating from multiple disparate communication sources, the communications log database entries representing those communications can be smaller in size, of a more consistent format, and are logged together in a single database. As a result, data representative of communications originating from multiple communications sources can be easily visually represented in an interactive user interface. Referring again to Figure 7, it can be seen that a single user interface 720 receives data from the single, unified communication log database 710 containing data entries representing communications originating from multiple different sources 701-707. User interface 720 thus allows simultaneous visualisation of communications from these multiple, different sources, enabling effective pattern recognition, searching and filtering across communication platforms from a single interface. For example, an area chart may be used to display the frequency of communications originating from different communications sources at times along a time line. Content summaries of the communications from multiple sources may be reproduced together, for example, as a collage, so that the themes of the communications can be readily recognised. Such visualisations may provide clear advantages over the list views of communication data that are typically provided by individual communications services to view the histories of communications sources. For instance, the communications log permits the easy visualisation of, for example, many hundreds to many thousands of communications originating from multiple communication sources at the same time. The distribution of these communications across the different communication sources and along the time line can be clearly seen. In addition, the range of times shown on the visual representation of the time line can be easily selected by a user interacting with the user interface (for example, using a multitouch screen to zoom by pinching and unpinching, and to pan by swiping). The data representing multiple communications channels contained in the communications log may also as a result be easily filtered and searched by a user interacting with the user interface, and the visual representation may be updated to reflect this filtering and searching. The visual representation of the data contained in the communications log may also thus facilitate a user locating, identifying and reviewing communications across multiple sources using a single user interface and without having to review the histories of the different communication sources separately. The visual representation of the data contained in the communications log, and the stored content and context data may also facilitate searching, identifying and navigating through linked conversations that occurred across communications histories of multiple communications services. In addition, the visual representation enables a user to identify patterns and trends in his communication history across multiple sources, and an identification of the communication practices of other parties. Reference will now be made to FIG. 1 which illustrates an example electronic device 201 which is usable in example embodiments described in the present disclosure. An electronic device 201 such as the electronic device 201 of FIG. 1 may be configured to create entries in and/or store a communications log in accordance with the present disclosure. Alternatively, or in addition, An electronic device 201 such as the electronic device 201 of FIG. 1 may be configured to cause the creation of entries in a communications log stored at one or more remote servers or peer devices, and or access and receive data contained in that remotely stored communications log. An electronic device 201 such as the electronic device 201 of FIG. 1 may, in addition, be configured to display a visual representation of entries contained in a communications log in an interactive user interface. It will be appreciated that, in other embodiments, some of the features, systems or subsystems of the electronic device 201 discussed below with reference to FIG. 1 may be omitted from electronic devices 201 which are configured to perform operations in relation to a communications log in accordance with the present disclosure.

In the illustrated example embodiment, the electronic device 201 is a communication device and, more particularly, is a mobile communication device having data and voice communication capabilities, and the capability to communicate with other computer systems; for example, via the Internet. It will, however, be appreciated that the electronic device 201 may take other forms, including any one of the forms listed below. Depending on the functionality provided by the electronic device 201, in various example embodiments the electronic device 201 may be a multiple-mode communication device configured for both data and voice communication, a mobile telephone, such as a smartphone, a wearable computer such as a watch, a tablet computer, a personal digital assistant (PDA), or a computer system such as a notebook, laptop or desktop system. The electronic device 201 may take other forms apart from those specifically listed above. The electronic device may also be referred to as a mobile communications device, a communication device, a mobile device and, in some cases, as a device.

The electronic device 201 includes a controller including a processor 240 (such as a microprocessor) which controls the overall operation of the electronic device 201. In certain electronic devices, more than one processor may be provided that together control the overall operation of the electronic device. The processor 240 interacts with device subsystems such as a wireless communication subsystem 211 for exchanging radio frequency signals with a wireless network 101 to perform communication functions. The processor 240 is communicably coupled with additional device subsystems including one or more output interfaces 205 (such as a display 204 and/or a speaker 256 and/or electromagnetic (EM) radiation source 257), one or more input interfaces 206 (such as a camera 253, microphone 258, keyboard (not shown), control buttons (not shown), a navigational input device (not shown), and/or a touch-sensitive overlay (not shown)) associated with a touchscreen display 204, an orientation subsystem 249, memory (such as flash memory 244, random access memory (RAM) 246, read only memory (ROM) 248, etc.), auxiliary input/output (I/O) subsystems 250, a data port 252 (which may be a serial data port, such as a Universal Serial Bus (USB) data port), a near field communications (NFC) subsystem 265, a short-range communication subsystem 262 and other device subsystems generally designated as 264. Some of the subsystems shown in FIG. 1 perform communication-related functions, whereas other subsystems may provide "resident" or on-device functions.

In at least some example embodiments, the electronic device 201 may include a touchscreen display which acts as both an input interface 206 (i.e. touch-sensitive overlay) and an output interface 205 (i.e. display). The touchscreen display may be constructed using a touch-sensitive input surface which is connected to an electronic controller and which overlays the display 204. The touch-sensitive overlay and the electronic controller provide a touch-sensitive input interface 206 and the processor 240 interacts with the touch-sensitive overlay via the electronic controller. In at least some example embodiments, the touch-sensitive overlay may have a touch-sensitive input surface which is larger than the display 204. For example, in at least some example embodiments, the touch-sensitive overlay may extend overtop of a frame (not shown) which surrounds the display 204. In such example embodiments, the frame (not shown) may be referred to as an active frame since it is capable of acting as an input interface 206. In at least some example embodiments, the touch-sensitive overlay may extend to the sides of the electronic device 201.

As noted above, in some example embodiments, the electronic device 201 may include a communication subsystem 211 which allows the electronic device 201 to communicate over a wireless network 101. The communication subsystem 211 includes a receiver 212, a transmitter 213, and associated components, such as one or more antenna elements 214 and 215, local oscillators (LOs) 216, and a processing module such as a digital signal processor (DSP) 217. The antenna elements 214 and 215 may be embedded or internal to the electronic device 201 and a single antenna may be shared by both receiver and transmitter. The particular design of the wireless communication subsystem 211 depends on the wireless network 101 in which electronic device 201 is intended to operate.

In at least some example embodiments, the electronic device 201 may communicate with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 214 through the wireless network 101 are input to the receiver 212, which may perform such common receiver functions as signal amplification, frequency down conversion, filtering, channel selection, etc., as well as analog-to-digital (A/D) conversion. A/D conversion of a received signal allows more complex communication functions such as demodulation and decoding to be performed in the DSP 217. In a similar manner, signals to be transmitted are processed, including modulation and encoding, for example, by the DSP 217. These DSP-processed signals are input to the transmitter 213 for digital-to-analog (D/A) conversion, frequency up conversion, filtering, amplification, and transmission to the wireless network 101 via the antenna 215. The DSP 217 not only processes communication signals, but may also provide for receiver and transmitter control. For example, the gains applied to communication signals in the receiver 212 and the transmitter 213 may be adaptively controlled through automatic gain control algorithms implemented in the DSP 217.

In some example embodiments, the auxiliary input/output (I/O) subsystems 250 may include an external communication link or interface; for example, an Ethernet connection. The electronic device 201 may include other wireless communication interfaces for communicating with other types of wireless networks; for example, a wireless network such as an orthogonal frequency division multiplexed (OFDM) network. The auxiliary I/O subsystems 250 may include a vibrator for providing vibratory notifications in response to various events on the electronic device 201 such as receipt of an electronic communication or incoming phone call, or for other purposes such as haptic feedback (touch feedback).

In some example embodiments, the electronic device 201 also includes a removable memory module 230 (typically including flash memory, such as a removable memory card) and a memory interface 232. Network access may be associated with a subscriber or user of the electronic device 201 via the memory module 230, which may be a Subscriber Identity Module (SIM) card for use in a GSM network or other type of memory card for use in the relevant wireless network type. The memory module 230 is inserted in or connected to the memory card interface 232 of the electronic device 201 in order to operate in conjunction with the wireless network 101.

The data port 252 may be used for synchronization with a user's host computer system (not shown). The data port 252 enables a user to set preferences through an external device or software application and extends the capabilities of the electronic device 201 by providing for information or software downloads to the electronic device 201 other than through the wireless network 101. The alternate download path may for example, be used to load an encryption key onto the electronic device 201 through a direct, reliable and trusted connection to thereby provide secure device communication.

In at least some example embodiments, the electronic device 201 also includes a device orientation subsystem 249 including at least one orientation sensor 251 which is connected to the processor 240 and which is controlled by one or a combination of a monitoring circuit and operating software. The orientation sensor 251 detects the orientation of the device 201 or information from which the orientation of the device 201 can be determined, such as acceleration. In some example embodiments, the orientation sensor 251 is an accelerometer, such as a three-axis accelerometer. An accelerometer is a sensor which converts acceleration from motion (e.g. movement of the device 201 or a portion thereof due to the strike force) and gravity which are detected by a sensing element into an electrical signal (producing a corresponding change in output). Accelerometers may be available in one, two or three axis configurations. Higher order axis configurations are also possible. Accelerometers may produce digital or analog output signals depending on the type of accelerometer.

An orientation sensor 251 may generate orientation data which specifies the orientation of the electronic device 201. The orientation data, in at least some example embodiments, specifies the orientation of the device 201 relative to the gravitational field of the earth.

In some example embodiments, the orientation subsystem 249 may include other orientation sensors 251, instead of or in addition to accelerometers. For example, in various example embodiments, the orientation subsystem 249 may include a gravity sensor, a gyroscope, a tilt sensor, an electronic compass or other suitable sensor, or combinations thereof. In some example embodiments, the device orientation subsystem 249 may include two or more orientation sensors 251 such as an accelerometer and an electronic compass.

The electronic device 201 may, in at least some example embodiments, include a near field communications (NFC) subsystem 265. The NFC subsystem 265 is configured to communicate with other electronic devices 201 and/or tags, using an NFC communications protocol. NFC is a set of short-range wireless technologies which typically require a distance of 4 cm or less for communications. The NFC subsystem 265 may include an NFC chip and an NFC antenna.

The electronic device 201 may include a microphone and/or one or more speakers. In at least some example embodiments, an electronic device 201 may include a plurality of speakers 256. For example, in some example embodiments, the electronic device 201 may include two or more speakers 265. The two or more speakers 256 may, for example, be disposed in spaced relation to one another. That is, in at least some example embodiments, the electronic device 201 may include a first speaker and a second speaker and the first speaker and the second speaker may be spatially separated from one another within the electronic device 201. In at least some example embodiments, the display 204 may be disposed between the first speaker and the second speaker of the electronic device. In such example embodiments, the first speaker may be located at one side of the display 204 and the second speaker may be located at another side of the display which is opposite the side of the display where the first speaker is located. For example, the first speaker may be disposed at a left side of the display and the second speaker may be disposed at a right side of the display.

In at least some example embodiments, each speaker 256 may be associated with a separate audio channel. The multiple speakers may, for example, be used to provide stereophonic sound (which may also be referred to as stereo).

The electronic device 201 may also include one or more cameras 253. The one or more cameras 253 may be capable of capturing images in the form of still photographs or motion video.

In at least some example embodiments, the electronic device 201 includes a front facing camera 253. A front facing camera is a camera which is generally located on a front face of the electronic device 201. The front face is typically the face on which a display 204 is mounted. That is, the display 204 is configured to display content which may be viewed from a side of the electronic device 201 where the camera 253 is directed. The front facing camera 253 may be located anywhere on the front surface of the electronic device; for example, the camera 253 may be located above or below the display 204. The camera 253 may be a fixed position camera which is not movable relative to the display 204 of the electronic device 201 and/or the housing of the electronic device 201. In such example embodiments, the direction of capture of the camera is always predictable relative to the display 204 and/or the housing. In at least some example embodiments, the camera may be provided in a central location relative to the display 204 to facilitate image acquisition of a face.

In at least some example embodiments, the electronic device 201 includes an electromagnetic (EM) radiation source 257. In at least some example embodiments, the EM radiation source 257 is configured to emit electromagnetic radiation from the side of the electronic device which is associated with a camera 253 of that electronic device 201. For example, where the camera is a front facing camera 253, the electronic device 201 may be configured to emit electromagnetic radiation from the front face of the electronic device 201. That is, in at least some example embodiments, the electromagnetic radiation source 257 is configured to emit radiation in a direction which may visible by the camera. That is, the camera 253 and the electromagnetic radiation source 257 may be disposed on the electronic device 201 so that electromagnetic radiation emitted by the electromagnetic radiation source 257 is visible in images obtained by the camera.

In some example embodiments, the electromagnetic radiation source 257 may be an infrared (IR) radiation source which is configured to emit infrared radiation. In at least some example embodiments, the electromagnetic radiation source 257 may be configured to emit radiation which is not part of the visible spectrum. The camera 253 may be a camera which is configured to capture radiation of the type emitted by the electromagnetic radiation source 257. Accordingly, in at least some example embodiments, the camera 253 is configured to capture at least some electromagnetic radiation which is not in the visible spectrum.

In some example embodiments, the electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to a host computer system using standard connectivity protocols. When a user connects their electronic device 201 to the host computer system via a USB cable or Bluetooth® connection, traffic that was destined for the wireless network 101 is automatically routed to the electronic device 201 using the USB cable or Bluetooth® connection. Similarly, any traffic destined for the wireless network 101 is automatically sent over the USB cable Bluetooth® connection to the host computer system for processing.

The electronic device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The electronic device 201 includes a short-range communication subsystem 262 which provides for wireless communication between the electronic device 201 and other electronic devices 201. In at least some example embodiments, the short-range communication subsystem 262 is a wireless bus protocol compliant communication mechanism such as a Bluetooth® communication module to provide for communication with similarly-enabled systems and devices.

The electronic device 201 stores data 227 in an erasable persistent memory, which in one example embodiment is the flash memory 244. In various example embodiments, the data 227 includes service data including information required by the electronic device 201 to establish and maintain communication with the wireless network 101. The data 227 may also include user application data such as email messages, address book and contact information, calendar and schedule information, notepad documents, image files, and other commonly stored user information stored on the electronic device 201 by its user, and other data. The data 227 stored in the persistent memory (e.g. flash memory 244) of the electronic device 201 may be organized, at least partially, into one or more databases or data stores. The databases or data stores may contain data items of the same data type or associated with the same application. For example, email messages, contact records, and task items may be stored in individual databases within the device memory.

The electronic device 201 may, in some example embodiments, be a mobile communication device which may provide two principal modes of communication: a data communication mode and a voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email messaging application and output to the display 204. A user of the electronic device 201 may also compose data items, such as email messages; for example, using the input devices in conjunction with the display 204. These composed items may be transmitted through the communication subsystem 211 over the wireless network 101.

In the voice communication mode, the electronic device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input interfaces 206). Alternative voice or audio I/O subsystems, such as a voice message recording subsystem, may also be implemented on the electronic device 201. Although voice or audio signal output is typically accomplished primarily through the speaker 256, the display screen 204 may also be used to provide an indication of the identity of a calling party, duration of a voice call, or other voice call related information.

The processor 240 operates under stored program control and executes software modules 221 stored in memory such as persistent memory; for example, in the flash memory 244. As illustrated in FIG. 1, the software modules 221 include operating system software 223 and other software applications 225 such as communication log module 260. In the example embodiment of FIG. 1, the communication log module 260 is implemented as a stand-alone application 225. However, in other example embodiments, the communication log module 260 could be implemented as part of the operating system 223 or other applications 225.

As discussed above, electronic devices 201 which are configured to perform operations in relation to a communications log may take a variety of forms. For example, in at least some example embodiments, one or more of the electronic devices which are configured to perform operations in relation to a communications log may be a smart phone or a tablet computer.

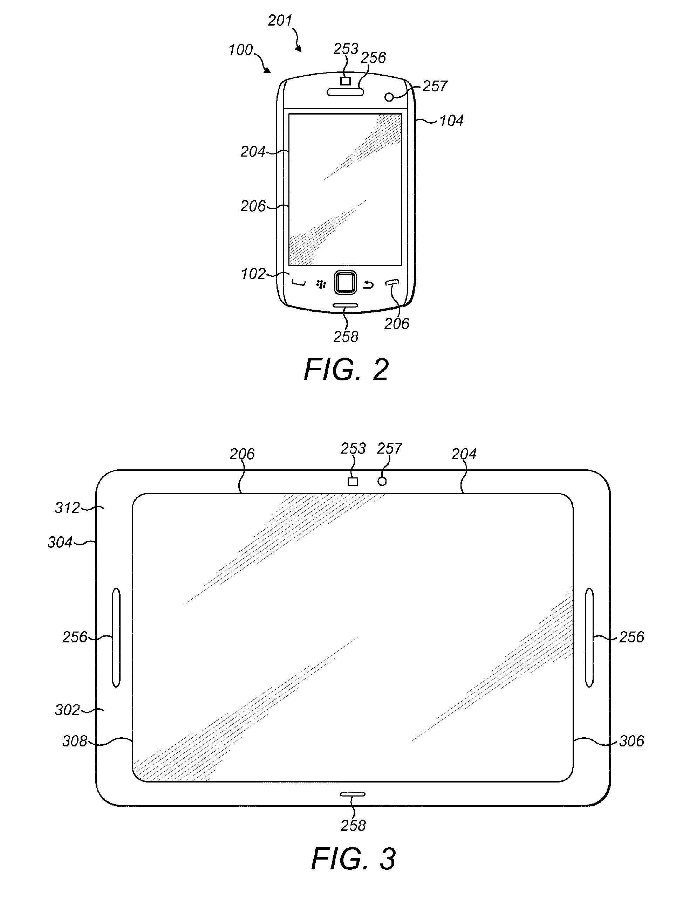

Referring now to FIG. 2, a front view of an example electronic device 201 which is a smartphone 100 is illustrated. The smartphone 100 is a mobile phone which offers more advanced computing capability than a basic non-smartphone cellular phone. For example, the smartphone 100 may have the ability to run third party applications which are stored on the smartphone.

The smartphone 100 may include the components discussed above with reference to FIG. 1 or a subset of those components. The smartphone 100 includes a housing 104 which houses at least some of the components discussed above with reference to FIG. 1.

In the example embodiment illustrated, the smartphone includes a display 204, which may be a touchscreen display which acts as an input interface 206. The display 204 is disposed within the smartphone 100 so that it is viewable at a front side 102 of the smartphone 100. That is, a viewable side of the display 204 is disposed on the front side 102 of the smartphone. In the example embodiment illustrated, the display 204 is framed by the housing 104.

The example smartphone 100 also includes other input interfaces 206 such as one or more buttons, keys or navigational input mechanisms. In the example illustrated, at least some of these additional input interfaces 206 are disposed for actuation at a front side 102 of the smartphone.

The example smartphone also includes a speaker 256. In the example embodiment illustrated, the smartphone includes a single speaker 256 which is disposed vertically above the display 204 when the smartphone 100 is held in a portrait orientation where its height is longer than its width. The speaker 256 may be disposed on the front face of the smartphone 100.

While the example smartphone 100 of FIG. 2 includes a single speaker 256, in other example embodiments, the smartphone 100 may include a greater number of speakers 256. For example, in at least some example embodiments, the smartphone 100 may include a second speaker 256 which is disposed vertically below the display 204 when the smartphone is held in a portrait orientation where its height is longer than its width (i.e. the orientation illustrated in FIG. 2).

The example smartphone 100 also includes a microphone 258. In the example illustrated, the microphone 258 is vertically disposed below the display 204 when the smartphone is held in the portrait orientation. The microphone 258 and at least one speaker 256 may be arranged so that the microphone is in close proximity to a user's mouth and the speaker 256 is in close proximity to a user's ear when the user holds the phone to their face to converse on the smartphone.

The example smartphone 100 also includes a front facing camera 253 which may be located vertically above the display 204 when the smartphone 100 is held in a portrait orientation where its height is longer than its width. The front facing camera 253 is located so that it may capture images of objects which are located in front of and/or surrounding the front side of the smartphone 100.

The example smartphone 100 also includes an electromagnetic radiation source 257. The electromagnetic radiation source 257 is disposed on the front side 102 of the smartphone 100. In this orientation, electromagnetic radiation which is produced by the electromagnetic radiation source 257 may be projected onto objects which are located in front of and/or surrounding the front side of the smartphone 100. Such electromagnetic radiation (or the projection of electromagnetic radiation onto objects) may be captured on images obtained by the camera 253.

Referring now to FIG. 3, a front view of an example electronic device 201 which is a tablet computer 300 is illustrated. The tablet computer 300 may include the components discussed above with reference to FIG. 1 or a subset of those components. The tablet computer 300 includes a housing 304 which houses at least some of the components discussed above with reference to FIG. 1.

The tablet computer 300 includes a display 204, which may be a touchscreen display which acts as an input interface 206. The display 204 is disposed within the tablet computer 300 so that it is viewable at a front side 302 of the tablet computer 300. That is, a viewable side of the display 204 is disposed on the front side 302 of the tablet computer 300. In the example embodiment illustrated, the display 204 is framed by the housing 304.

A frame 312 surrounds the display 204. The frame 312 is portion of the housing 304 which provides a border around the display 204. In at least some example embodiments, the frame 312 is an active frame 312. That is, the frame has a touch sensitive overlay which allows the electronic device 201 to detect a touch applied to the frame thus allowing the frame 312 to act as an input interface 206 (FIG. 1).

The example tablet computer 300 includes a plurality of speakers 256. In the example embodiment illustrated, the tablet includes two speakers 256. The two speakers 256 are disposed on opposing sides of the display 204. More particularly, when the tablet computer 300 is held in a landscape orientation (such as the orientation illustrated in FIG. 3) where its width is longer than its height, one of the two speakers is disposed on a right side 306 of the display 204 and one of the speakers is disposed on the left side 308 of the display 204. Both speakers 256 are disposed on the front side 302 of the tablet computer 300.

The example tablet computer 300 also includes a microphone 258. In the example illustrated, the microphone 258 is vertically disposed below the display 204 when the tablet computer is held in the landscape orientation illustrated in FIG. 3. The microphone 258 may be located in other locations in other example embodiments.

The example tablet computer 300 also includes a front facing camera 253 which may be located vertically above the display 204 when the tablet computer 300 is held in a landscape orientation (i.e. the orientation of FIG. 3). The front facing camera 253 is located so that it may capture images of objects which are located in front of and/or surrounding the front side of the tablet computer 300.

The example tablet computer 300 also includes an electromagnetic radiation source 257. The electromagnetic radiation source 257 is disposed on the front side 304 of the tablet computer 300. In this orientation, electromagnetic radiation which is produced by the electromagnetic radiation source 257 may be projected onto objects which are located in front of and/or surrounding the front side 302 of the tablet computer 300. Such electromagnetic radiation (or the projection of electromagnetic radiation onto objects) may be captured on images obtained by the camera 253.

The tablet computer 300 may have the ability to run third party applications which are stored on the tablet computer.

The electronic device 201, which may be tablet computer 300, is usable by an end-user to send and receive communications using electronic communication services supported by a service provider. The communications sent and received by an end-user using an electronic communication service provide a communication source which can be logged in a communications log. The communications log may log communication sources associated with different end-user entities. Such entities may be associated with an account provided by the communications service provider, having, for example, a user name and a password, by which the entity's digital identity can be identified and authenticated.

The end-user of an electronic device 201 may send and receive communications with different entities using different electronic communication services. Those services may or may not be accessible using one or more particular electronic devices. For example, a communication source of an end-user's text messages sent and received by an end-user using a particular electronic device 201 having a particular memory module 230, such as a USIM, may be accessible using that device 201, but those text messages may not be accessible using another device having a different memory module. Other electronic communication sources, such as a web-based email account, may be accessible via a web-site using a browser on any internet-enabled electronic device.

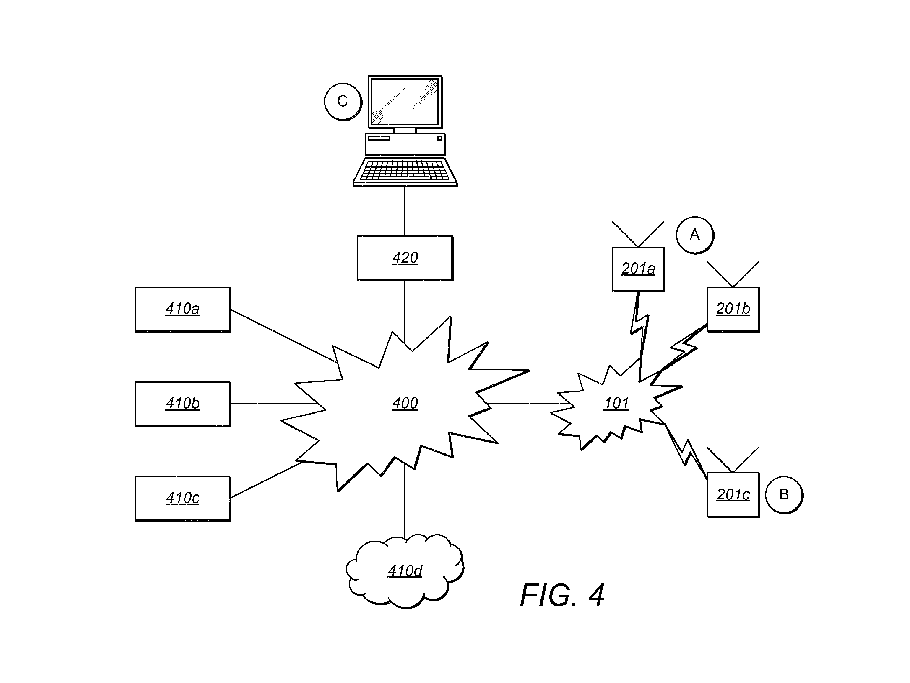

Figure 4 shows a system of networked apparatus by which electronic communications can be sent and received, and by which a communication log of those communications can be created. Referring to Figure 4, electronic devices 201 a, 201 b and 201 c are connected to wireless network 101 to perform voice and data communications. Wireless network 101 is connected to the Internet 400. Electronic device 201 a may be a tablet computer of the similar to tablet computer 300 described in Figure 2 above. Electronic devices 201 b and 201 c may be smartphones. Electronic device 201 d is a computing device such as a notebook, laptop or desktop, which is connected by a wired broadband connection to Local Area Network 420, and which is also connected to the Internet 400. Electronic devices 201a,b,c,d may access the Internet 400 to perform data communications therewith.

Servers 410a, 410b, 410c are also connected to the Internet 400 and one or more of them may individually or together support electronic communications services available to end-users of electronic devices 201 a, 201 b, 201 c and 201 d, enabling them to send and receive electronic communications. Servers 410a, 410b, 410c may be web servers.

In this example, web server 410a supports a user account-driven email service. A user having an account with the email service can access web server 410a using any of electronic devices 201 a, 201 b, 201 c and 201 d by navigating in a browser to a URL which provides a web site in the browser by which users can send and receive email using the email service. Alternatively, an email client application may be provided on any one of electronic devices 201 a, 201 b, 201 c and 201d by which users can send and receive email using the email service supported by web server 410a. The user's email history is accessible through web server 410a either using a browser or an email client. Communications sent and received by a user of email service provide a communication source that can be logged in the communications log of the present disclosure.

Web server 410b supports a social media network service. A user having an account with social media network service can access web server 410b using any of electronic devices 201 a, 201 b, 201 c and 201 d by navigating in a browser to a URL which provides a web site in the browser by which users can access the social media network and send and receive electronic communications with other users of the social media network. Alternatively, a social media network client application may be provided on any one of electronic devices 201 a, 201 b, 201 c and 201 d by which users can perform communications using social media network service supported by web server 410b. The communications may take different forms including email, inter-account messages, status updates, wall posts, nudges, and invites for example. The user's social media network communications history is accessible through web server 410b either using a browser or a social media network client. Communications sent and received by a user of social media network service provide a communication source that can be logged in the communications log of the present disclosure.

Web server 410c supports a microblogging service. A user having an account with microblogging service can access web server 410c using any of electronic devices 201 a, 201 b, 201 c and 201 d by navigating in a browser to a URL which provides a web site in the browser by which users can access the microblogging service and post electronic communications to the microblogging service and send and receive electronic communications with other users of the microblogging service. Alternatively, a microblogging service client application may be provided on any one of electronic devices 201 a, 201 b, 201 c and 201 d by which users can perform communications using microblogging service supported by web server 410c. The messages may take different forms including microblog posts, microblog feeds, tweets, and updates for example. The user's microblogging service communications history is accessible through web server 410c either using a browser or a microblogging client. Communications sent and received by a user of microblogging service provide a communication source that can be logged in the communications log of the present disclosure.

Other servers and services may of course be provided allowing users of electronic devices 201 a, 201 b, 201 c and 201 d to send and receive electronic communications by, for example, Voice over IP phone calls, video IP calls, video chat, group video chat, blogs, file transfers, instant messaging, and feeds.

Wireless network 101 may also support electronic communications without using Internet 400. For example, a user of smart phone 201 b may use wireless network 101 to make telephony calls, video calls, send text messages, send multimedia messages, and send instant messages to smart phone 201 c.

The example shown in Figure 4 is intended to be non-limiting and additional network infrastructure may of course be provided, such as a Public Switched Telephone Network (not shown), which may be used, for example, to make telephony calls using smartphone 201 b to a wired phone (not shown).

Other forms of electronic communication not listed above, or not yet envisaged, can be provided in conjunction with the system shown in Figure 4 and can provide communications sources that can be logged using communications log.

A user 'A' of tablet computer 201 a and smart phone 201 b may have communication log module 260 stored in the memory of those devices. The communication log module 260 may comprise instructions which cause processor 240 to run software. The software may, for example, run on user command, periodically or in the background while devices 201a and 201 b are active and operational. The communication log software creates and maintains database entries as a log of the user 'A's individual communications sent and received using email service supported by server 410a, social media network service supported by server 410b, and microblogging service supported by server 410c. The communications log software also logs text messages sent and received by and phone calls made and received by the smart phone 201 b of user A. Voice recognition software may be used to transcribe the content of phone calls. Key words may be extracted from these transcriptions.

User 'A's email account, social media network account, microblogging service account, text message account and phone call log all represent communication sources that can be associated with the communications log for user A, to thereby cause log entries to be created for emails, social media network communications, microblog communications, text messages and phone calls sent and received by user A. The association of these communication sources with the communication log software is initiated by user A operating devices 201 a and/or 201 b to couple each communication source to the software to enable the software to access communications from these sources. For example, to associate user A's email account with the communication log, the user may input his email address and password, which represent User 'A's digital identity on the email service, into communication log software on device 201 a, to authenticate the email account so that the communication log software can access the emails and create database entries in the log for emails sent and received by the user. Further authentication mechanisms may be provided.

Once a communication source is associated with a communication log, the communication log software may access the communication history for that communication source, which may for example, be stored at respective servers 410a, 410b, 410c or at devices 201 a, 201 b, and merges that history into the communication log. This may be achieved by communication log software crawling through the history and creating database entries for respective communications found in the history. Not all communications sent or received in relation to a communication source are necessarily logged in a user's communication log. For example, 'spam' email or notifications on social media networks may not be logged.

The communication log software provided on devices 201 a, 201 b may operate independently, or may work together. The devices may each independently create and maintain versions of communications logs in their respective flash memories 244, which communication logs may or may not be synchronised with each other. For example, database entries relating to text messages and calls made using smart phone 201 b and created in the smart phone 201 b's communication log may be transferred to the communication log software operating on tablet phone 201 a so that the communications log maintained on tablet phone 201 a is updated to also include data from those communication sources.

One or more servers in server cloud 410d may also operate communication log software which may operate independently of, or together with communication log software provided on devices 201 a, 201 b. A communication log for user A may be created and maintained in cloud 410d by storage at one or more cloud servers. This may complement, or be derived from the communication log or logs created by and maintained at electronic devices 201 a and 201 b. Alternatively, or in addition, entries in the communication logs at electronic devices 201 a and 201 b may be derived from the communication log or logs created and maintained in cloud 410d. For example, the servers in the cloud 410d may access the various communication sources associated with the communications log and create entries in the communication log for user 'A' maintained in the cloud 410d, and the devices 201 a, 201 b may retrieve the extracts from this communication log from cloud 410d as and when required. Instead of a server cloud, a one or more servers may perform the above-mentioned functions. In the present disclosure, "device" is intended to encompass end-user devices that create and maintain communications logs and also server devices that create and maintain communications logs.

The communications log software operating at devices 201 a, 201 b and/or server cloud 410d may monitor each associated communication source for occurrences of communications and create a database entry for each communication responsive to detection of that communication. Monitoring an associated communication source for occurrences of communications may comprise detecting communications originating from that source when the source is accessed. For example, when a user of device 201 a operates the email client software provided thereon to check and send email via email service supported by server 410a, the communication log software also accesses the email history to check for new sent and received emails for which database entries have not previously been created in the communications log. Alternatively, or in addition, the association of one or more of the communication sources to the communication log may cause one or more of those sources to send communications to the communication log software. Detecting communications originating from a communication source may include receiving at device an indication of a communication, said indication being sent by said communication source responsive to transmission or reception of a communication. For example, association of the user 'A's microblog service account to communication log may cause the server 410c to send copies of or indications of microblog posts for user A to communication software on one or more of devices 201 a, 201 b 401 d. Alternatively, or in addition, detecting communications originating from a communication source may include receiving an indication of a communication, said indication being sent by said communication source responsive to polling of said communication source. For example, communication log software provided on device 201a may periodically poll server 410b for indications of new electronic communications sent or received by user 'A' using social media network.

When communication log software provided at devices 201 a, 201 b and/or cloud server devices 410d creates a database entry for an electronic communication from a communication, either during merging a communication source history, or on synchronising with the communication source, a database entry is created in the communication log stored at devices 201 a, 201 b and/or cloud server devices 410d that includes one or more of:
- an identification of the communications source from which the communication was originated;
- an identification of the senders and recipients party to the communication;
- a date and time stamp of when the communication was sent or received;
- a link to the communication.
- data representative of the content of the communication including:
   o keywords produced by natural language processing of the content;
   o metatags produced by natural language processing of the content;
   o image data of or relating to the electronic communication;
   o video data of or relating to the electronic communication;
   o audio data of or relating to the electronic communication; and
- data indicative of the context in which the communication was sent or received including:
   o location data of sending and receiving parties;
   o motion and/or orientation data of sending and receiving parties;
   o device identification data of sending and receiving parties;
   o an device identification data of other devices coupled to the devices of the sending and receiving parties;
   o activity contemporaneous to sending or receiving the communication comprising: searches; accessing, sending or receiving of other communications; image data; and video data; and
   o activity related to the communication comprising: searches; accessing, sending or receiving of other communications; image data; and video data.

Of course, other data may be stored in the database entries. An example pseudo-entry in a communications log on smartphone 201 b for an email sent by user A to users B and C including a video recorded using smartphone 201 b is as follows:
- Message ID: [1234567890]
- Communications source: [email service provider from server 410a]
- Sender ID: [A]
- Recipient ID: [B, C]
- Sent: [2011-06-02 17:45:53]
- Link: [URL for messagelD 1234567890]
- Keywords: [Party, Paris, Summer]
- Image: [1x stills]
- Video: [1xvideo snippet]
- Location: [48.84637,2.34595];
- Sender device: [Smart phone 201 b]
- Coupled device: [Tablet 201a]
- Contemporaneous activity: [Communication ID 1234567888 (Microblog post by User B received from microblog service provider from server 410c: "Join me at the party opposite Pantheon for a Ricard"), Search "Bar Latin Quarter", Map Search "48.84637,2.34595", Communication ID 1234567889 (Status update to social media network service provider from server 410b: "Having a great Summer in Paris")]

Similar entries would be created in the communications log for communication ID 1234567888 and communication ID 1234567889. The contents of the communication log at device 201 b would be synced with the logs at device 201 a and in cloud 410d.

In this way, over time, a user 'A's communication log stored at devices 201 a, 201 b and/or cloud server devices 410d becomes populated with rich data entries representing an aggregation of the communication histories across all associated communication sources.

The software may also enable the visualisation of the contents of a communications log on a display of devices 201 a and 201 b, and also even devices 201 c, 201 d. For example, user 'A's communication log is stored locally at his devices 201 a, 201 b, which create the entries and periodically synchronise with each other. Communication log modules 260 on memories 244 of devices 201 a, 201 b include a visualisation element that, on changing focus of the devices to the communication log software, shows a visual representation of the communications log 'A' stored locally on devices 201 a, 201 b. A communications log for user 'A' stored in cloud server devices 410d is periodically updated or synced with communications logs stored on devices 201 a, 201 b. A web user interface enabled by a web server in server cloud 410d provides access to a visual representation of user 'A's communications log from devices 201 c and 201 d, where there is no local permanent storage of that communications log. Alternatively, communication log software on devices 201c and 201d (or even devices 201 a and 201 b) may allow access to visual representation of communications logs stored centrally, in the server cloud 410d. For example, user 'A' may have a username and password for accessing the visual representation of his communications log stored in cloud via a web interface using a browser, or using communications log client software.

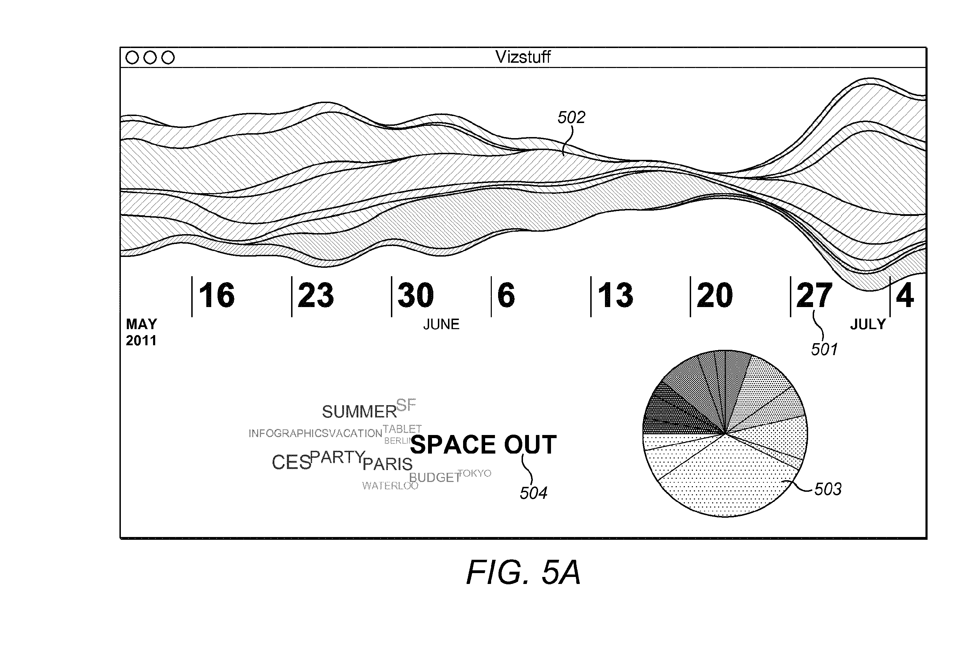

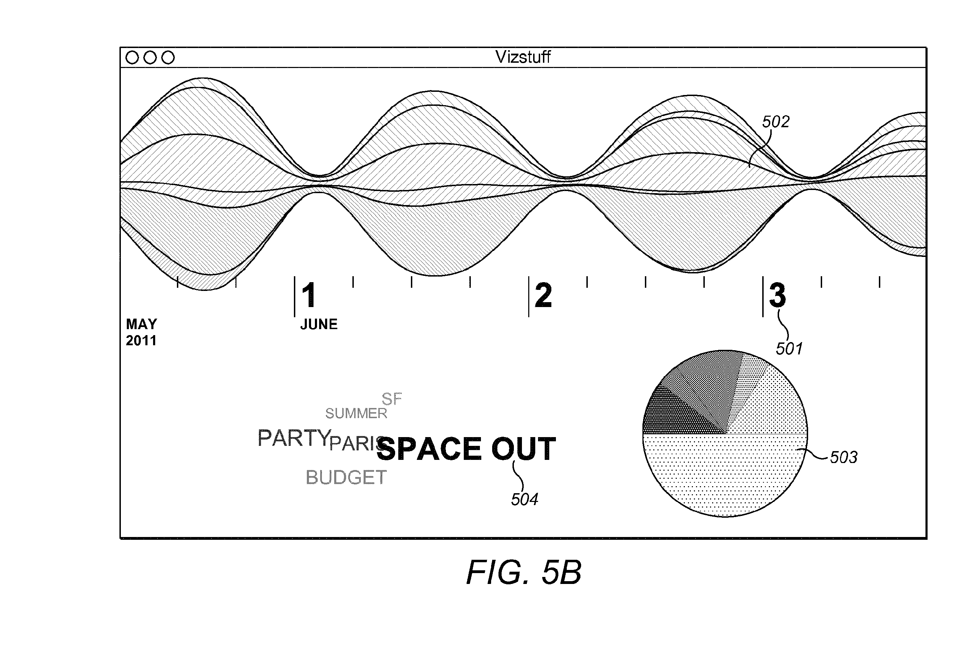

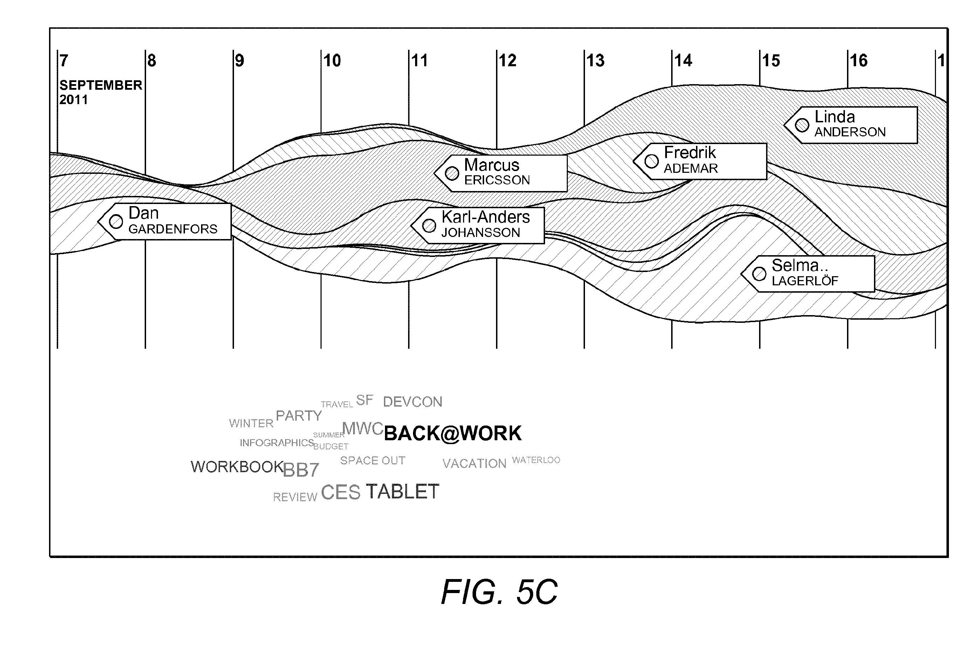

Figures 5A, 5B and 5C show an example visual representation of entries in user A's communications log, which can be shown on the displays of any of devices 201 a, 201 b, 201 c and 201 d by the mechanisms described above. In this instance, the user A is reviewing his communication log using the visual representation on his tablet computer 201 a.

Referring first to Figure 5A, the visual representation shows an interactive timeline 501 having a stacked area chart 502 showing the frequency of communications from different communication sources or with different parties to User 'A's communications over the time range shown in timeline 501. For example, over the range shown from around 16 May to 4 July 2011, it can be seen that the total number of daily communications across all sources sent and received by user A decreased from around 1 June to a minimum at around 23 June, after which time there was a sharp increase. The different coloured areas in the stacked area charts represent different communication sources or different parties to User 'A's communications. Whether the area chart distinguishes sources or parties (i.e. senders/recipients) may be selectable by the user.

Pie chart 503 shows the proportion of different communications originating from different communication sources for the period shown in the timeline 501 (i.e. in this case, 16 May to 4 July 2011). The divisions on the pie chart reflect the area chart distribution for that period. The pie chart 503 shows the user that more emails were sent and received during the period shown in the timeline than communications originating from other sources. Alternatively, the pie chart 503 could show the proportion of different communications originating from different communication sources for the day at the centre of the view timeline 501, 6 June 2011. Instead of pie chart 503, a bar graph could be provided to show the relative frequencies of communications from different sources.

Tag cloud 504 shows the relative frequency and importance of different keywords stored for database entries in user 'A's communication log for the period shown in the timeline 501 (i.e. in this case, 16 May to 4 July 2011). The tag cloud 504 is generated by computing a histogram of keywords and using the magnitude for each keyword as the weight of the corresponding tag in the tag cloud. The tag cloud 504 shows topics that are trending in User 'A's communications for the period shown in the timeline 501.

The timeline 501 can be zoomed, for example, by performing a reverse pinch gesture on multitouch screen 204 of device 201 a, and Figure 5B shows an updated view after the timeline 501 has zoomed in on 1-3 June. The area chart 502 has changed to show the intra-day fluctuations visible at this level of detail, and the pie chart 503 and tag cloud 504 are updated to reflect the data for 2 June. The data shown in area chart can be filtered, for example by performing a tapping gesture on screen 204 on the 'email' section of pie chart 504, the area chart would be updated so that only the email data would be shown. Searching can be achieved, for example, using tag cloud 503. By performing a tapping gesture on "party" in tag cloud 503, a search window widget would appear with "party" input as the keyword search filter, and the user may then run the search or edit the search input before doing so. Alternatively, tapping on a keyword in tag cloud 504 may immediately cause a search of database entries to be executed. Performing the above is search, the area chart 502 would be updated so that only emails having "party" as a key word would be shown against timeline 501.

At this level of detail, individual communications may be represented using user interface objects. For example, after filtering and searching as above, an envelope icon (not shown) may be shown overlaying the emails area chart for 2 June with the text "Users B and C" underneath to show that an email was sent to these users that evening regarding a party (i.e. represented by the database entry having communication ID 1234567890 in the communication log). Tapping on this envelope icon on screen 204 may bring up a window including a map showing, for example, from where the email was sent (based on the [Location] field), the stored video snippet of the email's attached video may be played in the window, and a link to the message may be provided, which, if selected, would cause the original email to be opened using email client on tablet computer 201 a. Links to user 'B's related microblog post (communication ID 1234567888) and user 'A's related status update on social media network (communication ID 1234567889) may also be shown in the window.

Following this preview, user A can operate the tablet computer 201 a to close the window, pinch the time line 501 to zoom out, and then swipe along the timeline 501 from right to left to change the date range to that shown in Figure 5C. Here, instead of the area chart 502 showing the different communication sources, user A has selected to differentiate communications by sender/receiver party. Here, communications with different individuals or entities across all communication sources are shown together. For example, it can be seen that on 15 September 2011, user A communicated predominantly with Linda Anderson and Selma Lagerlöf. The area chart entry for Linda Anderson combines social media communications with her, text messages, and phone calls made that day. Performing a tapping gesture on Linda Anderson's name would refresh the visualisation to show only User 'A's communications with Linda Anderson, with the area chart 502 differentiating the communication sources.

Pinching out the timeline 501 completely would result in user 'A's entire communication history being represented in display. This would mean that the entire database, including hundreds of thousands of entries, would need to be represented. Even with the very compact representation of a communication instance in the communication log database, trying to display all the data would mean that the many hundreds of thousands of entries would need to be parsed and displayed at the same time. This would be too cumbersome to refresh and so in order to allow responsive interaction the database may be stored in several level of details (LODs). To create a higher LOD the previous level may be sampled at a given interval, e.g. 2x, 4x, 8x etc. As the local density of the database can change drastically over time a simple nearest point sample might miss single communication instances surrounded by radio silence. On the other hand in dense regions sometimes an average communication instance must be created from several instances. The area chart may be rendered by applying a convolution with a cosine curve on the nearest level of detail.

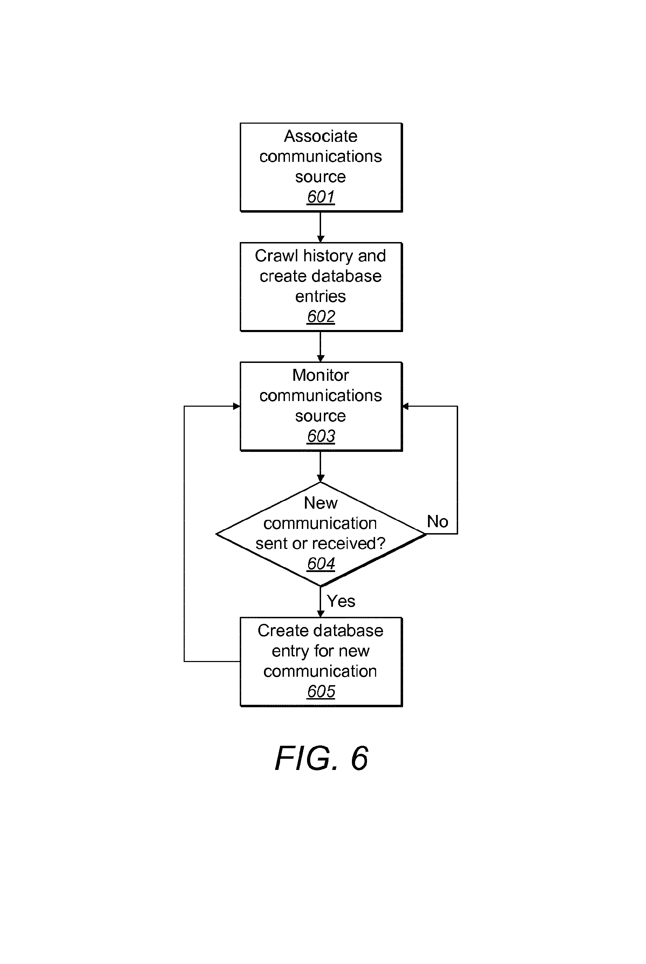

Figure 6 shows a flow chart of a process carried out by communication log software executed by any one of devices 201a, 201b, 201c, 201d, or server cloud devices 410d to create and maintain a communications log.

In step 601, a communications source is associated with the communications log. This may be done by identifying a digital identity to the communications log. In step 602 the history of communications originating from the communication source is crawled and database entries are created to merge the history into the communications log. In step 603 the communications log software monitors communications source in accordance with one of the methods described above. If, at step 604 a new communication is sent or received, then the communications log software creates a new database entry at 605 for that communication. Otherwise the software loops back and continues monitoring.

Thus, in accordance with the present disclosure, a communications log containing data representative of the communications histories across a number of sources and be created, and the data contained therein easily visualized, manipulated and searched.

Further exemplary embodiments of the present disclosure will now be set out in the following numbered clauses.
1. A computer-implemented method comprising:
   creating, in a communications log having a plurality of communication sources associated with the communications log, a database entry for each communication originating from any of the associated communication sources, each database entry comprising data representative of the respective communication.
2. A method as recited in clause 1, further comprising monitoring each associated communication source for occurrences of communications and creating said database entry for each communication responsive to detection of that communication.
3. A method as recited in clause 2, wherein monitoring an associated communication source for occurrences of communications comprises one or more of: detecting communications originating from that source when the source is accessed; and detecting communications originating from that source responsive to transmission or reception of a communication.
4. A method as recited in clause 3, wherein detecting communications originating from a communication source comprises one or more of: receiving an indication of a communication, said indication being sent by said communication source responsive to transmission or reception of a communication; and receiving an indication of a communication, said indication being sent by said communication source responsive to polling of said communication source.
5. A method as recited in any preceding clause, further comprising:
   crawling a history of communications originating from a communication source on association of that communication source with the communications log; and
   creating respective database entries for communications found when crawling the history.
6. A method as recited in any preceding clause, further comprising associating a communication source to a communications log by creating a coupling between the communication source and the communication log.
7. A method as recited in clause 6, further comprising associating a digital identity of an originator of communications from the communications source to the communications log by authentication of that digital identity.
8. A method as recited in any preceding clause, wherein the communications log is stored in the storage of an end-user electronic device.
9. A method as recited in any of clauses 1 to 8, wherein the communications log is stored in one or more server devices and is accessible by a remote end-user electronic device by network communications.
10. A method as recited in clause 9, wherein the communications log is implemented in a cloud computing architecture such that one or more networked server devices in the cloud create database entries in the communications log.
11. A method as recited in any preceding clause, wherein each database entry includes data representative of at least one of the following: an identification of the communications source from which the communication was originated; an identification of the senders and recipients party to the communication; a content of the communication; a date and time stamp of when the communication was sent or received; and a link to the communication.
12. A method as recited in clause 11, wherein the data representative of the content of the communication comprises one or more of: one ore more keywords; one or more metatags; image data of or relating to the electronic communication; video data of or relating to the electronic communication; and audio data of or relating to the electronic communication.
13. A method as recited in any preceding clause, wherein a database entry includes data indicative of the context in which the communication was sent or received.
14. A method as recited in clause 13, wherein the context data comprises data representative of one or more of the following: location data of sending and receiving parties; motion and/or orientation data of sending and receiving parties; device identification data of sending and receiving parties; an device identification data of other devices coupled to the devices of the sending and receiving parties; activity contemporaneous to sending or receiving the communication comprising: searches; accessing, sending or receiving of other communications; image data; and video data; and activity related to the communication comprising: searches; accessing, sending or receiving of other communications; image data; and video data.
15. A method as recited in any preceding clause, wherein the communications log stores data representative of communications from said plurality of communication sources, said communications being selected from a group comprising one or more of: emails, sms text messages, mms multimedia messages, blog posts, microblog posts, instant messages, telephony calls, videophone calls, IP phone calls, IP video calls, IP videoconference calls, file transfers, social media messages, social media posts, and rss feeds.
16. A method as recited in any preceding clause, further comprising displaying a visual representation of at least a subset of the communications log data in an interactive user interface on a display of a user electronic device.
17. A method as recited in clause 16, wherein the visual representation the communications log data is shown along an interactive timeline, displaying data based on a date and time stamp stored for each database entry.
18. A method as recited in clause 17, wherein the visual representation comprises an area chart representative of the frequency of communications across all sources associated with the communications log shown along a timeline, based on the date and time stamp stored for each database entry.
19. A method as recited in clause 17 or 18, wherein the visual representation distinguishes the communications log data dependent on the communications source from which each communication originated, or dependent on the sending and receiving parties to each communication.
20. A method as recited in clause 17, 18 or 19, wherein the entries of the communications log shown in the visual representation can be filtered.
21. A method as recited in clause 20, wherein the entries shown can be filtered dependent on a selection of one or more of the following: one or more communication sources; content data; one or more keywords; one or more sender or recipient parties; context data.
22. A method as recited in any of clauses 17 to 21, wherein user interface objects indicative of individual communications are displayed in the user interface.
23. A method as recited in clause 22, wherein a selection of a user interface object representative of an individual communication activates a link to the original communication.
24. A method as recited in clauses 17 to 23, wherein data representative of the content of the communications currently in the displayed range of the time line is reproduced.
25. A device comprising:
   one or more data processing units; and
   memory containing instructions which when carried out by one or more of the data processing units cause the device to:
      create, in a communications log having a plurality of communication sources associated with the communications log, a database entry for each communication originating from any of the associated communication sources, each database entry comprising data representative of the respective communication.
26. A device as recited in clause 25, wherein the instructions further cause the device to monitor each associated communication source for occurrences of communications and create said database entry for each communication responsive to detection of that communication.
27. A device as recited in clause 26, wherein monitoring an associated communication source for occurrences of communications comprises one or more of: detecting communications originating from that source when the source is accessed; and detecting communications originating from that source responsive to transmission or reception of a communication.
28. A device as recited in clause 27, wherein detecting communications originating from a communication source comprises one or more of: receiving an indication of a communication, said indication being sent by said communication source responsive to transmission or reception of a communication; and receiving an indication of a communication, said indication being sent by said communication source responsive to polling of said communication source.
29. A device as recited in any of clauses 25 to 28, further comprising:
   crawling a history of communications originating from a communication source on association of that communication source to the communications log; and
   creating respective database entries for communications found when crawling the history.
30. A device as recited in any of clauses 25 to 29, the memory further comprising instructions that cause the device to be operable to associate a communication source to a communications log by creating a coupling between the communication source and the communication log.
31. A device as recited in clause 30, wherein associating a communication source to a communications log comprises associating a digital identity of an originator of communications from the communications source to the communications log by authentication of that digital identity.
32. A device as recited in any of clauses 24 to 31, wherein the device is an end-user electronic device and the communications log is stored in the storage of the end-user electronic device.
33. A device as recited in any of clauses 25 to 31, wherein the communications log is stored in one or more server devices and is accessible by a remote end-user electronic device by network communications.
34. A device as recited in clause 33, wherein the communications log is implemented in a cloud computing architecture such that the device is one or more of one or more networked server devices in the cloud that create database entries in the communications log.
35. A device as recited in any of clauses 25 to 34, wherein each database entry includes data representative of at least one of the following: an identification of the communications source from which the communication was issued; an identification of the senders and recipients party to the communication; a content of the communication; a date and time stamp of when the communication was sent or received; and a link to the communication.
36. A device as recited in clause 35, wherein the data representative of the content of the communication comprises one or more of: one ore more keywords; one or more metatags; image data of or relating to the electronic communication; video data of or relating to the electronic communication; and audio data of or relating to the electronic communication.
37. A device as recited in any of clauses 25 to 36, wherein a database entry includes data indicative of the context in which the communication was sent or received.
38. A device as recited in clause 37, wherein the context data comprises data representative of one or more of the following: location data of sending and receiving parties; motion and/or orientation data of sending and receiving parties; device identification data of sending and receiving parties; an device identification data of other devices coupled to the devices of the sending and receiving parties; activity contemporaneous to sending or receiving the communication comprising: searches; accessing, sending or receiving of other communications; image data; and video data; and activity related to the communication comprising: searches; accessing, sending or receiving of other communications; image data; and video data.
39. A device as recited in any of clauses 25 to 38, wherein the communications log stores data representative of communications from said plurality of communications sources, said communications being selected from a group comprising one or more of: emails, sms text messages, mms multimedia messages, blog posts, microblog posts, instant messages, telephony calls, videophone calls, IP phone calls, IP video calls, IP videoconference calls, file transfers, social media messages, social media posts, and rss feeds.
40. A device as recited in any of clauses 25 to 39, wherein the device is an end-user electronic device, or and an end-user electronic device having one or more processors and a memory, further comprising instructions stored on the memory of the end-user electronic device which when run on a processor of the end-user electronic device, causes a visual representation of the communications log data to be displayed in an interactive user interface on a display of the end-user electronic device.
41. A device as recited in clause 40, wherein the visual representation the communications log data is shown along an interactive timeline, displaying data based on the date and time stamp stored for each database entry.
42. A device as recited in clause 41, wherein the visual representation comprises an area chart representative of the frequency of communications across all sources associated with the communications log shown along a timeline, based on the date and time stamp stored for each database entry.
43. A device as recited in clause 41 or 42, wherein the visual representation distinguishes the communications log data dependent on the communications source from which each communication originated, or dependent on the sending and receiving parties to each communication.
44. A device as recited in clause 41, 42 or 43, wherein the entries of the communications log shown in the visual representation can be filtered.
45. A device as recited in clause 44, wherein the entries shown can be filtered dependent on a selection of one or more of the following: one or more communication sources; one or more keywords; one or more sender or recipient parties; context data.
46. A device as recited in any of clauses 41 to 45, wherein user interface objects indicative of individual communications are displayed in the user interface.
47. A device as recited in clause 46, wherein a selection of a user interface object representative of an individual communication activates a link to the original communication.
48. A device as recited in any of clauses 41 to 47, wherein data representative of the content of the communications currently in the displayed range of the time line is reproduced.
49. A computer-readable medium comprising instructions which when executed by one or more data processing units of an electronic device cause the device to:
   create, in a communications log having a plurality of communication sources associated with the communications log, a database entry for each communication originating from any of the associated communication sources, each database entry comprising data representative of the respective communication.
50. A computer-implemented method comprising:
   displaying, in an interactive user interface on a display of an end-user electronic device, a visual representation of database entries contained in a communications log having a plurality of communication sources associated with the communications log, each database entry comprising data representative of a communication originating from any of the said associated communications source.
51. A method as recited in clause 50, wherein the visual representation the communications log data is shown along an interactive timeline, displaying data based on a date and time stamp stored for each database entry.
52. A method as recited in clause 51, wherein the visual representation comprises an area chart representative of the frequency of communications across all sources associated with the communications log shown along a timeline, based on the date and time stamp stored for each database entry.
53. A method as recited in clause 51 or 52, wherein the visual representation distinguishes the communications log data dependent on the communications source from which each communication originated, or dependent on the sending and receiving parties to each communication.
54. A method as recited in clause 51, 52 or 53, wherein the entries of the communications log shown in the visual representation can be filtered.
55. A method as recited in clause 54, wherein the entries shown can be filtered dependent on a selection of one or more of the following: one or more communication sources; content data; one or more keywords; one or more sender or recipient parties; context data.
56. A method as recited in any of clauses 51 to 55, wherein user interface objects indicative of individual communications are displayed in the user interface.
57. A method as recited in clause 56, wherein a selection of a user interface object representative of an individual communication activates a link to the original communication.
58. A method as recited in clauses 51 to 57, wherein data representative of the content of the communications currently in the displayed range of the time line is reproduced.
59. A device comprising:
   a display;
   one or more data processing units; and
   memory containing instructions which when carried out by the one or more of the data processing units cause the device to:
      display, in an interactive user interface on a display of an end-user electronic device, a visual representation of database entries contained in a communications log having a plurality of communication sources associated with the communications log, each database entry comprising data representative of a communication originating from any of the said associated communication sources.
60. A computer-readable medium comprising instructions which when executed by one or more data processing units of an electronic device cause the device to:
   display, in an interactive user interface on a display of an end-user electronic device, a visual representation of database entries contained in a communications log having a plurality of communication sources associated with the communications log, each database entry comprising data representative of a communication originating from any of the said associated communication sources.
61. A method, device or computer-readable medium as recited in any preceding clause, wherein the communications log is for one or more given users.
62. A method, device or computer-readable medium as recited in any preceding clause, wherein each communication source is a source of communications sent and received by a given user of a given electronic communication service.

## Claims

1. A computer-implemented method comprising:
displaying, in an interactive user interface on a display of an end-user electronic device, a visual representation of database entries contained in a communications log having a plurality of communication sources associated with the communications log, each database entry comprising data representative of a communication originating from any of the said associated communications sources, wherein the visual representation the communications log data is shown along an interactive timeline displaying the communications log data based on a date and time stamp stored for each database entry.

2. A method as claimed in claim 1, wherein the visual representation comprises an area chart representative of the frequency of communications across all sources associated with the communications log shown along a timeline, based on the date and time stamp stored for each database entry.

3. A method as claimed in claim 1 or 2, wherein the visual representation distinguishes the communications log data dependent on the communications source from which each communication originated, or dependent on the sending and receiving parties to each communication.

4. A method as claimed in claim 1, 2 or 3, wherein the entries of the communications log shown in the visual representation can be filtered.

5. A method as claimed in claim 4, wherein the entries shown can be filtered dependent on a selection of one or more of the following: one or more communication sources; content data; one or more keywords; one or more sender or recipient parties; context data.

6. A method as claimed in any preceding claim, wherein user interface objects indicative of individual communications are displayed in the user interface.

7. A method as claimed in claim 6, wherein a selection of a user interface object representative of an individual communication activates a link to the original communication.

8. A method as claimed in any preceding claim, wherein data representative of the content of the communications currently in the displayed range of the time line is reproduced.

9. A method as claimed in any preceding claim, further comprising:
creating, in the communications log, a database entry for each communication originating from any of the associated communication sources.

10. A method as claimed in claim 9, further comprising monitoring each associated communication source for occurrences of communications and creating said database entry for each communication responsive to detection of that communication.

11. A method as claimed in claim or 10, further comprising:
crawling a history of communications originating from a communication source on association of that communication source with the communications log; and
creating respective database entries for communications found when crawling the history.

12. A method as claimed in any preceding claim, further comprising associating a communication source to a communications log by creating a coupling between the communication source and the communication log.

13. A method as claimed in any preceding claim, wherein the communications log is stored in the storage of an end-user electronic device.

14. A method as claimed in any preceding claim, wherein the communications log is stored in one or more server devices and is accessible by a remote end-user electronic device by network communications.

15. A method as claimed in any preceding claim, wherein each database entry includes data representative of at least one of the following: an identification of the communications source from which the communication was originated; an identification of the senders and recipients party to the communication; a content of the communication; a date and time stamp of when the communication was sent or received; and a link to the communication.

16. A method as claimed in claim 15, wherein the data representative of the content of the communication comprises one or more of: one ore more keywords; one or more metatags; image data of or relating to the electronic communication; video data of or relating to the electronic communication; and audio data of or relating to the electronic communication.

17. A method as claimed in any preceding claim, wherein a database entry includes data indicative of the context in which the communication was sent or received.

18. A device comprising:
a display;
one or more data processing units; and
memory containing instructions which when carried out by the one or more of the data processing units cause the device to:
display, in an interactive user interface on a display of an end-user electronic device, a visual representation of database entries contained in a communications log having a plurality of communication sources associated with the communications log, each database entry comprising data representative of a communication originating from any of the said associated communication sources, wherein the visual representation the communications log data is shown along an interactive timeline displaying the communications log data based on a date and time stamp stored for each database entry.

19. A computer-readable medium comprising instructions which when executed by one or more data processing units of an electronic device cause the device to:
display, in an interactive user interface on a display of an end-user electronic device, a visual representation of database entries contained in a communications log having a plurality of communication sources associated with the communications log, each database entry comprising data representative of a communication originating from any of the said associated communication sources, wherein the visual representation the communications log data is shown along an interactive timeline displaying the communications log data based on a date and time stamp stored for each database entry.
